# EUROPEAN PATENT SPECIFICATION

(11) **EP 1 785 036 B1**
(45) Date of publication and mention of the grant of the patent: **11.01.2012**
(21) Application number: 05292412.3
(22) Date of filing: 14.11.2005
(51) Int. Cl.: A23B 4/16, A23B 4/06, A23L 1/325, A23L 3/3418

(54) **Method of preserving fish**
Verfahren zur Konservierung von Fisch
Procédé de conservation de poisson

(43) Date of publication of application: 16.05.2007
(73) Proprietor: Fortune Frozen Foods, Co Ltd, Kaohsiung (TW)
(72) Inventor: Tsai, Chun-Hsiung, Chien Ching Dist. Kaohsiung (TW)
(74) Representative: Pontet, Bernard

(56) References cited:
- WO-A-97/39951
- ES-A1- 2 154 215
- US-A- 3 460 193
- US-A- 5 846 594
- US-A1- 2002 012 724
- US-A1- 2005 048 188
- PATENT ABSTRACTS OF JAPAN vol. 2002, no. 06, 4 June 2002 (2002-06-04) -& JP 2002 034444 A (SO BUNTOKU), 5 February 2002 (2002-02-05)
- PATENT ABSTRACTS OF JAPAN vol. 018, no. 571 (C-1267), 2 November 1994 (1994-11-02) -& JP 06 209694 A (KATSUMASA HIRABAYASHI), 2 August 1994 (1994-08-02)
- PATENT ABSTRACTS OF JAPAN vol. 009, no. 005 (C-260), 10 January 1985 (1985-01-10) -& JP 59 159734 A (YOSHIMURA SANGYO KK; others: 02), 10 September 1984 (1984-09-10)
- PATENT ABSTRACTS OF JAPAN vol. 1997, no. 03, 31 March 1997 (1997-03-31) -& JP 08 308477 A (M K ENG:KK), 26 November 1996 (1996-11-26)
- PATENT ABSTRACTS OF JAPAN vol. 015, no. 206 (C-0835), 27 May 1991 (1991-05-27) -& JP 03 058738 A (CHIYUUSHIYOU KIGYO JIGYODAN), 13 March 1991 (1991-03-13)

## Description

The invention relates to a method of preserving fish, more particularly to a method of preserving fish in a vacuum package including oxygen and having a predetermined vacuum pressure.

Fish meat is susceptible to bacterial spoilage. Therefore, fresh fish must be subjected to proper preservation treatments after harvesting in order to preserve freshness.

The most extensively adopted preservation treatments include bleeding, sterilizing, and low-temperature storing (e.g., cold storing or freezing) to help maintain the freshness and luster of fish meat. Thereafter, the fish is packaged and transported in cold storage so as to preserve the freshness of the fish meat for an extended period.

Fish packaging techniques generally include vacuum packaging and modified or controlled atmosphere packaging. -Document US 2005/048188 discloses a fish packaging technique including modified atmosphere packaging. Document US 2002/012 724, JP 2002 034 444 and US 5 846 594 disclose classical fish packaging techniques including vacuum packaging. In comparison, vacuum packed fish meat is prone to color changes and an escape of tissue exudates from the fish meat.

Moreover, vacuumpacked fish meat maybe contaminated by anaerobes, such as Clostridium botulinum. If the vacuum packed fish meat is inadvertently exposed to a temperature exceeding 4°C , anaerobic Clostridium botulinum will breed to decompose the fish meat, thereby resulting in bad odor, decoloration and putrification of the fish meat. Furthermore, Clostridium botulinum may build up in the fish meat before color change of the fish meat is observable, thereby posing a serious threat to consumers.

In addition, as the vacuum package needs to be opened for thawing the fish meat, once the fish meat comes into contact with the air after the vacuum package is opened for thawing, bacteria may breed to contaminate the fish meat.

In view of the aforesaid problems associated with vacuum packed fish meat, controlled or modified atmosphere packaging of fish products is becoming more and more popular, and invites research and development.

The applicant has proposed a method of preserving a fish meat product in a co-pending Korean Patent Application No. 10-2005-0071106 filed on August 3, 2005 to overcome the aforesaid problems, which has earned good reception in the marketplace and among consumers. However, the applicant noted that when the fish meat is preserved in a substantially vacuum environment containing an oxygen-containing gas, the freshness and color of the fish meat at the thickest part, i.e., the meat along the blood line (i.e., the strip of dark red meat extending along the lateral sides of the fish near the skin) is not satisfactory. Therefore, there is still room for improvement.

Therefore, the object of the present invention is to provide a method of preserving fish, which can inhibit growth of both aerobic and anaerobic bacteria to thereby preserve the freshness of the fish.

According to this invention, a method of preserving fish includes:
- cleaning a fish, preparing a fillet from the fish and sterilizing the fillet;
characterized in that it further comprises:
- removing a blood line from the fillet by forming the fillet with a V-shaped shallow cut along the blood line, the blood line extending along a lateral side of the fish proximate to a skin of the fish;
- in a subsequent step, packing the fillet in a package which is vacuumed, which is subsequently filed with pure oxygen and which has a vacuum pressure ranging from 80% to 95% of atmosphere before sealing, the vacuum pressure in the vacuumed package ranging from 720 mmHg to 700 mmHg; and
- freezing the packaged fillet, the vacuumed package being frozen quickly in a super-cold environment having a temperature ranging from -60°C to -70°C, the vacuumed package being further stored in a freezing environment having a temperature ranging from -20°C to -60°C after being frozen at the temperature of -60°C to -70°C.

Other features and advantages of the present invention will become apparent in the following detailed description of the preferred embodiment with reference to the accompanying drawings, of which:
Figure 1 is a flowchart illustrating the preferred embodiment of a method of preserving fish according to this invention;
Figure 2 is a schematic perspective view of a fillet prepared from the fish; and
Figure 3 is a sectional side view showing the fillet with the blood line removed therefrom.

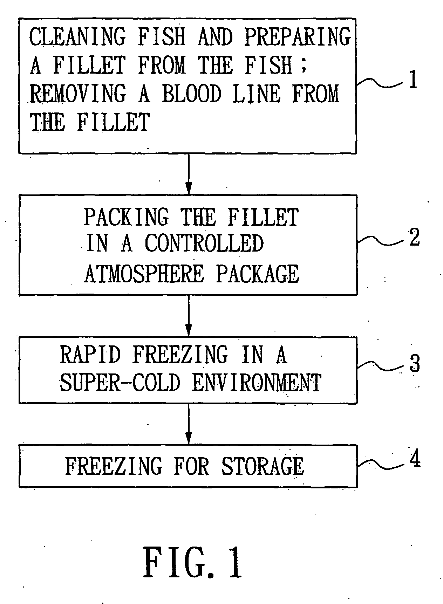

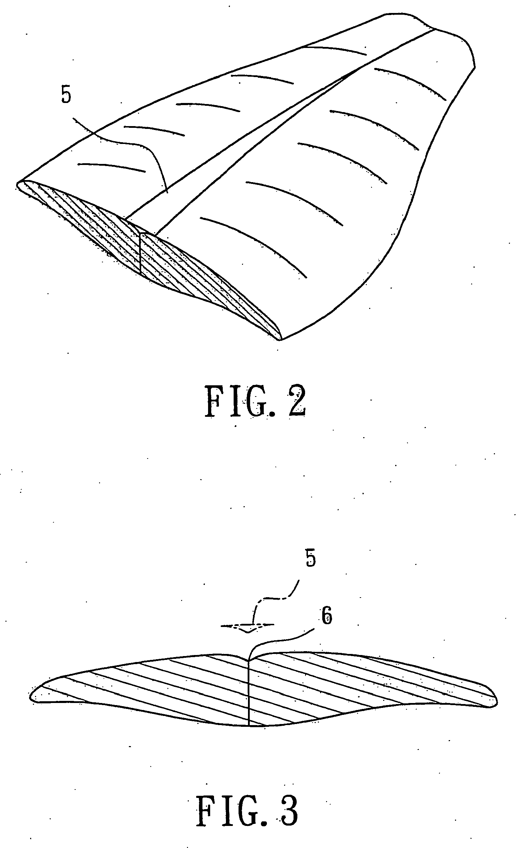

Referring to Figure 1, the preferred embodiment of a method of preserving fish according to the present invention is shown to include steps 1 to 4. The method is mainly used for fish whose meat is relatively thin after skinning, such as Taiwan porgy, cobia, greater amberjack, salmon, tuna, etc. Step 1 of this method includes cleaning the fish and preparing a fillet from the fish in a low-temperature environment. The cleaning of the fish includes skinning, viscerating, and sterilizing. The fillet prepared from the fish is shown in Figs. 2 and 3. A blood line 5 that extends along a lateral side of the fish proximate to the skin is removed from the fillet by forming the fillet with a shallow cut 6 along the blood line 5. The blood line 5 refers to a meat part of the fish that has a dark red color and that contains a lot of blood. The blood line 5 is removed because the part of the fillet along the blood line 5 is thick, and the subsequent preservation steps, i.e., steps 2 to 4, are unable to provide desirable good results at this part. Preferably, the shallow cut 6 is V-shaped in order to obtain a nice and neat appearance.

In step 2, the sterilized fillet is packed in a sterilized package which is vacuumed, which is subsequently filled with a predetermined amount of pure oxygen, and which has a vacuum pressure ranging from 80% to 95% of atmosphere before sealing. Thus, the fish fillet can be preserved in a controlled atmosphere containing a predetermined amount of oxygen so as to effectively prevent breeding of both aerobic and anaerobic bacteria/microorganisms, thereby preserving the freshness of the fish fillet. In this embodiment, the vacuum pressure of the vacuumed package ranges from 720 mmHg to 700 mmHg.

In step 3, the packaged fish fillet is frozen quickly in a super-cold environment having a temperature ranging from -60°C to -70°C so as to further inhibit growth of bacteria.

In step 4, the frozen fish fillet package is stored in a freezing environment having a temperature ranging from -20°C to -60°C.

In this invention, since the fish fillet is stored in a vacuumed package including oxygen and having a vacuum pressure ranging from 80% to 95% of atmosphere, growth of both aerobic and anaerobic bacteria inside the package can be inhibited to preserve the freshness of the fish fillet. Furthermore, as the package contains a suitable amount of air therein, the fish fillet can be thawed in the refrigerator or at room temperature with the package intact to prevent contamination of the fish fillet by bacteria. In addition, since the blood line 5 is removed from the fish fillet to reduce the thickness of the fish meat at that part, oxygen present in the package can penetrate substantially throughout the fish fillet to help maintain the freshness and color of the fish meat, thereby rendering the fish fillet more appealing to consumers. Thus, the drawbacks associated with the prior art can be effectively eliminated.

## Claims

1. A method of preserving fish, comprising:
- cleaning a fish, preparing a fillet from the fish and sterilizing the fillet;
**characterized in that** it further comprises:
- removing a blood line (5) from the fillet by forming the fillet with a V-shaped shallow cut (6) along the blood line (5), the blood line (5) extending along a lateral side of the fish proximate to a skin of the fish;
- in a subsequent step, packing the fillet in a package which is vacuumed, which is subsequently filed with pure oxygen and which has a vacuum pressure ranging from 80% to 95% of atmosphere before sealing, the vacuum pressure in the vacuumed package ranging from 720 mmHg to 700 mmHg; and
- freezing the packaged fillet, the vacuumed package being frozen quickly in a super-cold environment having a temperature ranging from -60°C to -70°C, the vacuumed package being further stored in a freezing environment having a temperature ranging from -20°C to -60°C after being frozen at the temperature of -60°C to -70°C.

## Patentansprüche

1. Verfahren zum Konservieren von Fisch, das folgendes umfasst:
- Reinigen des Fisches, Herstellen eines Filets aus dem Fisch und keimfrei machen des Filets;
**dadurch gekennzeichnet, dass** es weiterhin folgendes umfasst:
- Entfernen einer Blutlinie (5) aus dem Filet durch Herstellen des Filets mit einem V-förmigen, flachen Schnitt (6) entlang der Blutlinie (5), wobei die Blutlinie (5) entlang einer Seite des Fisches unmittelbar an der Haut des Fisches verläuft;
- in einem anschließenden Schritt, Verpacken des Filets in einer Verpackung, die vakuumiert wird, welche anschließend mit reinem Sauerstoff gefüllt wird und vor dem Versiegeln einen Vakuumdruck zwischen 80 % und 95 % aufweist, wobei der Vakuumdruck in der vakuumierten Verpackung zwischen 720 mmHg und 700 mmHg beträgt; und
- Einfrieren des verpackten Filets, wobei die vakuumierte Packung in einer eiskalten Umgebung mit einer Temperatur zwischen - 60 °C bis - 70 °C rasch eingefroren wird, wobei die vakuumierte Packung in einer tiefgekühlten Umgebung mit einer Temperatur zwischen - 20 °C bis - 60 °C weiterhin gelagert wird, nachdem sie bei einer Temperatur zwischen - 60 °C und - 70 °C eingefroren worden ist.

## Revendications

1. Une méthode de conservation du poisson, comprenant:
- un nettoyage d'un poisson, une préparation d'un filet à partir du poisson et une stérilisation du filet;
**caractérisé en ce qu'**il comprend en outre:
- une suppression d'une ligne de sang (5) du filet en formant dans le filet une coupe en forme de V peu profonde (6) le long de la ligne de sang (5), la ligne de sang (5) s'étendant le long d'une face latérale du poisson à proximité d'une peau du poisson;
- dans une étape ultérieure, un emballage du filet dans un paquet qui est aspiré, qui est ensuite rempli avec de l'oxygène pur, et qui a une pression de vide allant de 80% à 95% d'atmosphère avant de sceller, la pression de vide dans le paquet sous vide allant de 720 mmHg à 700 mmHg et
- une congélation du filet emballé, le paquet sous vide étant congelé rapidement dans un environnement super-froid ayant une température allant de -60 ° C à - 70 ° C, le paquet sous vide étant en outre stocké dans un environnement de congélation ayant une température comprise entre -20 ° C à -60 ° C après avoir été congelé à la température de -60 ° C à -70 ° C.
